# EUROPEAN PATENT APPLICATION

(11) **EP 4 686 946 A1**
(43) Date of publication of application: **04.02.2026**
(21) Application number: 24192473.7
(22) Date of filing: 01.08.2024
(51) Int. Cl.: G01N 35/00, B01L 9/06, B25J 15/00, B25J 15/02, B25J 15/12

(54) **A SYSTEM AND METHOD FOR HANDLING OF LABORATORY TUBES**

(71) Applicant: Novaticlab, Sia, 2167 Marupe (LV)
(72) Inventor: KLAVA, Juris, LV-2167 Marupe (LV)
(74) Representative: Kromanis, Artis

(57) **Abstract**

Invention relates to a laboratory tube handling system, especially to a gripping mechanism for automated handling of sample tubes in laboratory environments, as well as to a method of handling laboratory tubes. A laboratory tube handling system comprising a table, a robotic arm positioned on said table, and a gripper attached to the robotic arm via a gripper actuator. The gripper comprises pairs of gripper fingers configured to grip sample tubes and wherein the gripper fingers are made elastic so that part of the gripper finger flexes when it is pushed onto the sample tube. The method comprises the steps of moving the gripper so that the pairs of the gripper fingers are positioned at the test tubes, which is followed by the movement of the gripper fingers onto the test tube, in result of which each pair of the gripper fingers grips the test tube for further handling.

## Description

### Field of the invention

Invention relates to a laboratory tube handling system, especially to a gripping mechanism for automated handling of sample tubes in laboratory environments, as well as to a method of handling laboratory tubes.

### Background of the invention

The prior art discloses various laboratory or sample tube handling systems.

U.S. patent application publication No. US6060022A discloses a system for a clinical lab that processes and sorts multiple sample tubes. The system comprises a central controller, a workstation, one or more analysers, and an automated centrifuge. The workstation has automatic detectors for detecting the presence of a holder holding specimen containers. The workstation has a bar code reader for reading bar codes on the containers. The system has a transport subsystem, preferably a workstation robotic arm and an analyser robotic arm for transporting the specimen containers, moving them to and from the workstation, to and from the analysers, and to and from the centrifuge.

Japan patent application publication JP2009095297 discloses a device equipped with an oppositely arranged pair of arms, an arm-opening and closing mechanism for regulating the interval of the pair of the arms, and a container-carrying device having a motor for driving the arm-opening and closing mechanism.

China patent application publication No. CN110658351 discloses an automatic sample injector for magnetic separation of iron ore and magnetic iron in a laboratory. The automatic sample injector consists of a sample storage system, a washing system, a driving system and a control system.

U.S. patent application publication No. US2022349910 discloses a receptacle delivery system comprising a carriage configured to move from a first to a second location of an instrument. The carriage is configured to removably support a receptacle and may include a receptacle clamping mechanism. The receptacle mechanism is configured to apply a clamping force to the receptacle as the carriage moves from the first to the second location and release the clamping force as the carriage moves from the second to the first location.

Somehow similar systems as described above is also disclosed in the U.S. patent publication No. US8276632, U.S. patent application publication No. US2016075462, and in China patent application publications Nos. CN111760607 and CN111113393.

### Summary of the invention

The present invention is a laboratory tube handling system comprising a table, a robotic arm onto it, and a gripper attached to the one end of the robotic arm.

The gripper comprises a pair of adapters. Each adapter is operably connected to the gripper actuator of the robotic arm so that pair of adapters move linearly to each other and in relation to the gripper actuator. The gripper comprises a pair of linear bearings. Each linear bearing is connected to the respective adapter. The gripper further comprises a pair of finger support units. Each finger support unit is connected to the respective linear bearing and respective adapter so that linear movement of each adapter is translated into a linear movement of respective finger support unit.

Each finger support unit comprises cut-outs and protrusions. The protrusions of one finger support unit are positioned within the cut-outs of second finger support unit so that the linear movement of both finger support units is limited to the movement of protrusions of one finger support unit within the cut-outs of second finger support unit.

The gripper further comprises transition brackets connected to the finger support units in the area of the protrusions of the finger support units.

The gripper further comprises gripper fingers. Each gripper finger comprises a finger rod and a finger end connected to the one end of the finger rod. The gripper finger is connected to the transition bracket through the finger rod. Each finger end comprises at least two gripping rollers rotatably connected thereto. The gripper fingers are arranged in pairs so that both gripper fingers can grip a sample tube to be handled. The pair of gripper finger are arranged so that the gripping rollers of one finger end faces the gripping rollers of the second finger end further facilitating a grip of the sample tubes. The finger rod is made of elastic material so that the finger rod flexes when the pair of gripper fingers pushed onto the sample tube. The finger rod is made more elastic than the finger end allowing to grip various sizes of sample tubes due to elasticity of the finger rod, but at the same time securely holding the sample tubes by means of more rigid finger ends. Elasticity may be achieved by a choice of the material using various metals, like aluminium, or polymers, like PLA, ABS, or by design of the finger rod and finger end adjusting the elasticity or rigidness.

In addition to enhance the system's flexibility, allowing for the precise handling of individual tubes or rods, two additional gripper fingers are connected to two transition bracket and arranged opposite side of the gripper in relation to other pairs of the gripper fingers, in result of which the gripper fingers are arranged on two opposite sides of the gripper.

The present invention is also a method for handling sample tubes by means of the aforementioned laboratory tube handling system. The method comprises the following steps:
(1) moving the gripper by means of the robotic arm so that the pairs of the gripper fingers are positioned at the test tubes to be handled, wherein the pairs of the gripper fingers are closed;
(2) moving the gripper by means of the robotic arm so that each pair of the gripper fingers is pushed onto the test tube to be handled, in result of which the pair of the gripper fingers grips the test tube;
(3) moving the gripper by means of the robotic arm so that the pairs of the gripper fingers with griped test tubes are positioned at a designated place where the gripped test tubes should be released; and
(4) opening the pairs of the gripper fingers releasing the tests tubes in the designated place.

The step of pushing each pair of the gripper fingers onto the test tubes without opening the gripper fingers removes addition step - the same opening of the gripper fingers. This opening step can be excluded due to elasticity of the gripper fingers, especially due to elasticity of the finger rods of the gripper fingers. Hence, the handling speed of the test tubes can be increased and at least for picking-up simultaneously, multiple, compactly arranged test tubes can be achieved as no additional space for opened gripper fingers is needed. Moreover, elasticity of the gripper fingers allows to grip the test tubes of various sizes or diameters without the need to know exact sizes or diameters of the test tubes before the gripping. Hence, the elasticity of the system in handling various sizes, diameters of the test tubes is greatly improved

### Brief description of the drawings

The drawings illustrate generally, by way of example, but not by way of limitation, various embodiments of the invention.
Fig. 1 is a top perspective view of a laboratory tube handling system (1) comprising a table (2), a robotic arm (3) onto it, and a gripper (4) attached to the one end of the robotic arm (3).
Fig. 2 is a top perspective view of a gripper actuator (31) and a gripper (4).
Fig. 3 is an exploded view of the gripper (4) as seen in Fig. 2.
Fig. 4 is a top perspective view of the gripper (4).
Fig. 5 is a top perspective view of the gripper (4), when the gripper fingers (5) are closed
Fig. 6 is a top perspective view of the gripper (4) as seen in Fig. 4, but the gripper fingers (5) are open.
Fig. 7A is a top view of a pair of the gripper fingers (5) in open state.
Fig. 7B is a top view of a pair of the gripper fingers (5) in a closed state and a small diameter test tube is grabbed
Fig. 7C is a top view of a pair of the gripper fingers (5) in a closed state and a large diameter test tube is grabbed.
Fig. 8A is a top perspective view of a pair of the gripper fingers (5) in open state.
Fig. 8B is a top view of a pair of the gripper fingers (5) in a closed state and a small diameter test tube is grabbed
Fig. 8C is a top view of a pair of the gripper fingers (5) in a closed state and a large diameter test tube is grabbed.
Fig. 9 is an exploded view of the gripper finger (5).

### Detailed description of the embodiments

The preferred embodiments of the invention are now described with reference to the figures to illustrate objectives, advantages, and efficiency of the present invention.

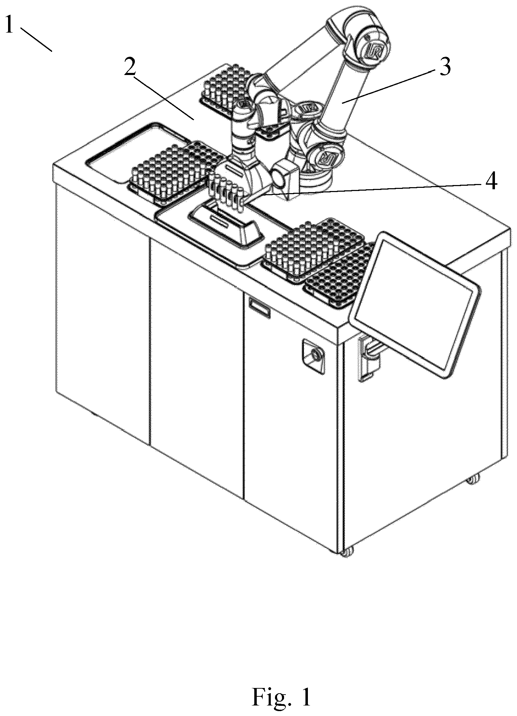

Fig. 1 is a top perspective view of a laboratory tube handling system (1) comprising a table (2), a robotic arm (3) onto it, and a gripper (4) attached to the one end of the robotic arm (3). This figure illustrates integration of the gripper (4), which is object of the invention.

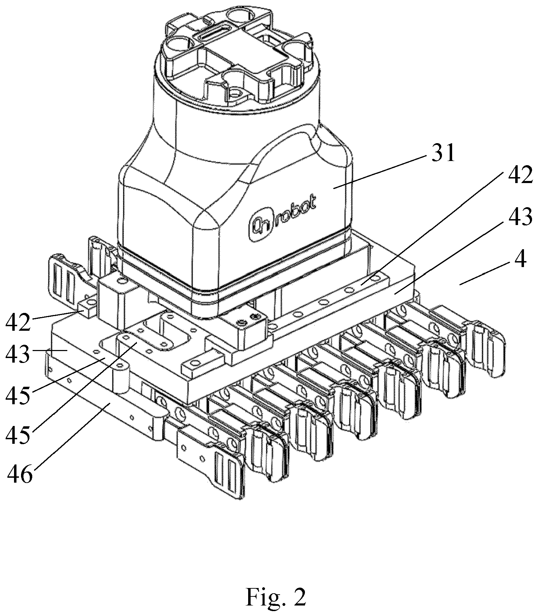

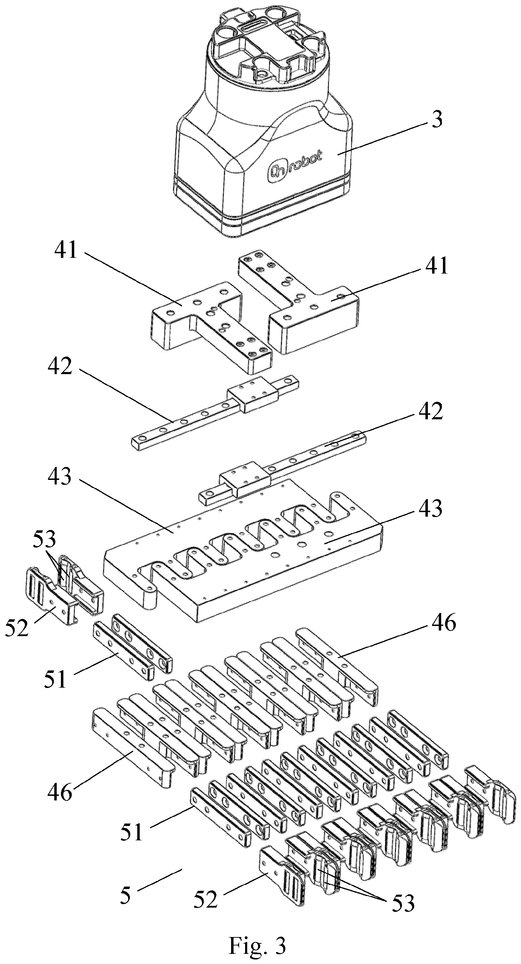

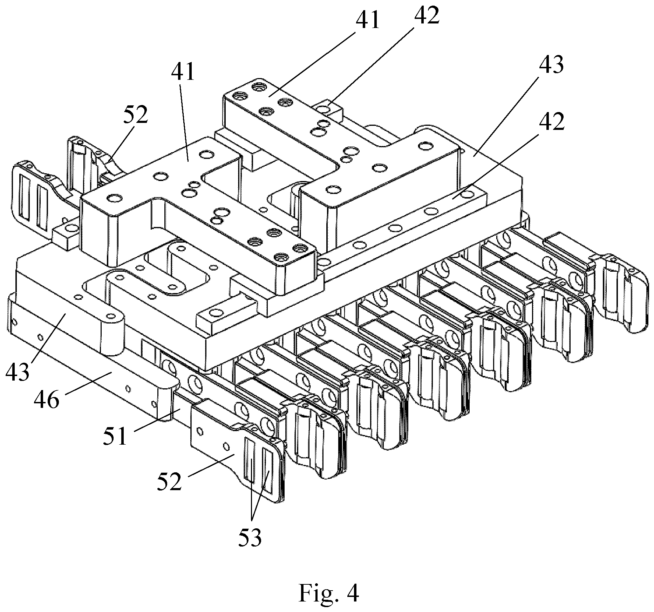

Fig. 2 is a top perspective view of a gripper actuator (31) and a gripper (4) connected thereto. Fig. 3 is an exploded view of the gripper (4) as seen in Fig. 2 illustrating all main parts of the gripper (4). Fig. 4 is a top perspective view of the gripper (4) as seen in Figs. 2 and 3, but without a gripper actuator (3). The gripper (4) comprises a pair of adapters (41), wherein each adapter (41) is operably connected to the gripper actuator (31) of the robotic arm (3) so that pair of adapters (41) move linearly to each other and in relation to the gripper actuator (31). The gripper (4) comprises a pair of linear bearings (42). Each linear bearing (42) is connected to the respective adapter (41). The gripper further comprises a pair of finger support units (43). Each finger support unit (43) is connected to the respective linear bearing (42) and respective adapter (41) so that linear movement of each adapter (41) is translated into a linear movement of respective finger support unit (43). Each finger support unit (43) comprises five cut-outs (44) and six protrusions (45). Basically, the pair of the protrusions (45) form one cut-out (44) or one cut-out (44) forms a pair of protrusions (45). The protrusions (45) and cut-outs (44) of one finger support unit (43) are opposed to the protrusions (45) and cut-outs (44) of second finger support unit (43). Five protrusions (45) of one finger support unit (43) are positioned within five cut-outs (44) of the second finger support unit (43) so that the linear movement of both finger support units (43) to each other is limited to the movement of protrusions (45) of one finger support unit (43) within the cut-outs (44) of the second finger support unit (43). The gripper (4) further comprises twelve transition brackets (46) connected to the finger support units (43) in the area of the protrusions (45) of the finger support units (43). As each finger support unit (43) of the pair comprises six protrusions (45) and the transition brackets (46) are attached to each protrusion (45), the gripper (4) has twelve transition brackets (46) in total. The gripper (4) further comprises gripper fingers (5). Each gripper finger (5) comprises a finger rod (51) and a finger end (52) connected to the one end of the finger rod (51). The finger end (52) comprises at least two gripping rollers (53) rotatably connected thereto. Each gripper finger (5) is connected to the transition bracket (46) through the finger rod (51). The gripper fingers (5) are arranged in pairs so that both gripper fingers (5) can grip a sample tube (10) to be handled. The pair of the gripper fingers (5) is made so that one gripper finger (5) is attached to one finger support unit (43) and the second gripper finger (5) is attached to the second finger support unit (43) so that linear movement of both finger support units (43) to each other is translated into the movement of the pair of the gripper fingers (5) to each other. This results in opening and closing of the pair of the gripper fingers (5). Moreover, the pair of gripper finger (5) are arranged so that the gripping rollers (53) of one finger end (52) faces the gripping rollers (53) of the second finger end (52). The gripper (4) is characterized in that the finger rod (51) is made of elastic material so that the finger rod (51) flexes when the pair of gripper finger (5) is pushed onto the sample tube (10), and wherein the finger rod (51) is made more elastic than the finger end (52) allowing to grip various sizes of sample tubes (10) due to elasticity of the finger rod (51), but at the same time securely holding the sample tubes (10) by means of more rigid finger ends (52).

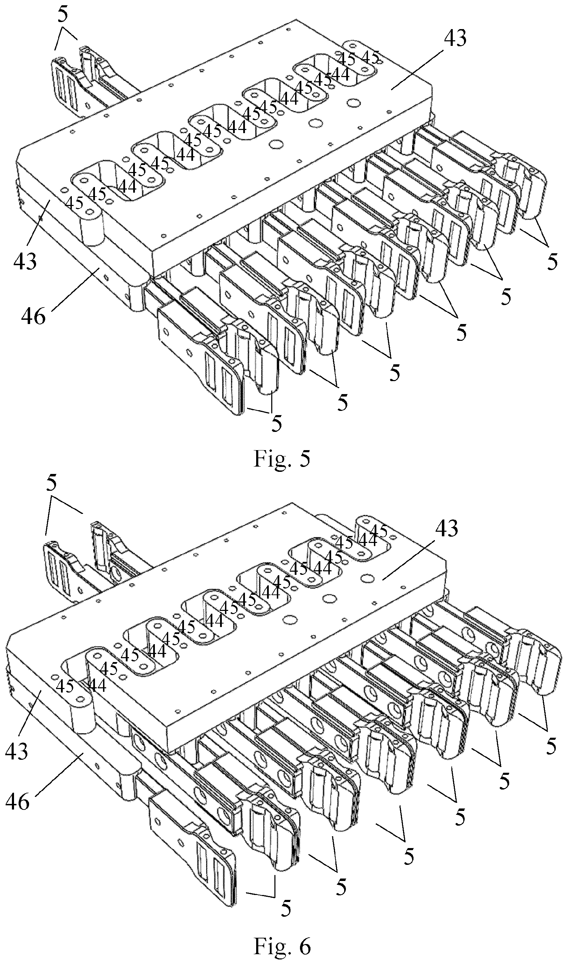

Fig. 5 is a top perspective view of the gripper (4), when the gripper fingers (5) are closed. Fig. 6 is a top perspective view of the gripper (4) as seen in Fig. 4, when the gripper fingers (5) are open. When the gripper fingers (5) are closed, the space between the finger ends (53) of the pair of the gripper fingers (5) is such that the pair of the gripper fingers (5) grip the sample tube (10) due to elasticity of each gripper finger (5). On a side of the gripper (4) where the six pairs of the gripper fingers (5) are positioned, six sample tubes (10) can be gripped simultaneously. On a side of the gripper (4) where one pair of the gripper fingers (5) is positioned, the gripper (4) can be used for individual handling of a single sample tube (10). Due to this arrangement of the pairs of the gripper fingers (5). This one or secondary pair of the gripper fingers (5) enhances system's flexibility, allowing for the precise handling of individual sample tubes (10) or rods. When the gripped sample tubes (10) are transferred to the new location, the sample tubes (10) are unloaded from the gripper (4) by opening of the pairs of the gripper fingers (5) as seen in Fig. 6.

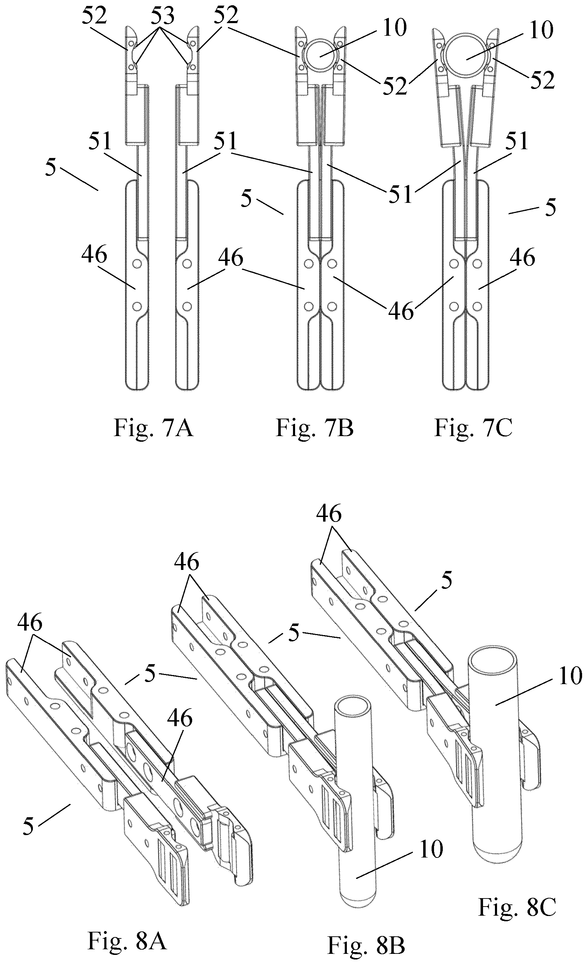

Figs. 7A to 7C illustrates the pair of the gripper fingers (5) in various operation phases. Fig. 7A is a top view of a pair of the gripper fingers (5) in open state. The same configuration in a perspective view is illustrated in Fig. 8A. Fig. 7B is a top view of a pair of the gripper fingers (5) in a closed state and a small diameter (10 mm) test tube is grabbed. The same configuration in a perspective view is illustrated in Fig. 8B. Fig. 7C is a top view of a pair of the gripper fingers (5) in a closed state and a large diameter (16 mm) test tube is grabbed. The same configuration in a perspective view is illustrated in Fig. 8C. Elasticity of the gripper finger (5) allows to grip the sample tubes (10) of various diameters without a need for further adjustments of the gripper finger (5).

Figs. 7A to 8C basically illustrate a method for handling sample tubes (10) by means of the laboratory tube handling system. The method comprises the following steps:
- moving the gripper (4) by means of the robotic arm (3) so that the pairs of the gripper fingers (5) are positioned at the test tubes (10) to be handled, wherein the pairs of the gripper fingers (5) are closed;
- moving the gripper (4) by means of the robotic arm (3) so that each pair of the gripper fingers (5) is pushed onto the test tube (10) to be handled, in result of which the pair of the gripper fingers (5) grips the test tube (10) (see Fig. 7B, 7C, 8B, 8C);
- moving the gripper (4) by means of the robotic arm (3) so that the pairs of the gripper fingers (5) with griped test tubes (10) are positioned at a designated place where the gripped test tubes (10) should be released; and
- opening the pairs of the gripper fingers (5) releasing the tests tubes (10) in the designated place (see Fig. 7A and 8B).

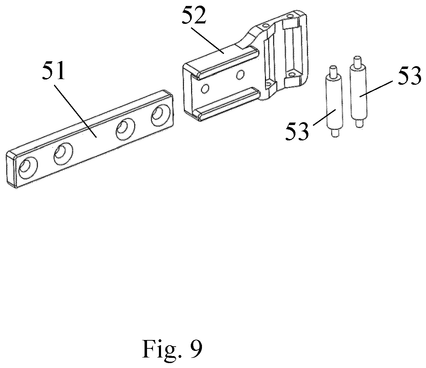

Fig. 9 is an exploded view of the gripper finger (5) illustrating the gripper finger (5) in more detail.

While the invention may be susceptible to various modifications and alternative forms, specific embodiments of which have been shown by way of example in the figures and have been described in detail herein, it should be understood that the invention is not intended to be limited to the particular forms disclosed. Rather, the invention includes all modifications, equivalents, and alternatives falling within the scope of the invention as defined by the following claims.

### List of references

1 - a laboratory tube handling system;
2 - a table;
3 - a robotic arm;
31 - a gripper actuator;
4 - a gripper;
41 - an adapter;
42 - a linear bearing;
43 - a finger support unit;
44 - a cut-out;
45 - a protrusion;
46 - a transition bracket;
5 - a gripper finger;
51 - a finger rod;
52 - a finger end;
53 - a gripping roller; and
10 - a sample tube.

## Claims

1. A laboratory tube handling system (1) comprising a table (2), a robotic arm (3) positioned on said table (2), and a gripper (4) attached to the robotic arm (3) via a gripper actuator (31) thereof, wherein the gripper (4) comprises:
- a pair of adapters (41), wherein each adapter (41) is operably connected to the gripper actuator (31) of the robotic arm (3) so that pair of adapters (41) move linearly to each other;
- a pair of linear bearings (42), wherein each linear bearing (42) is connected to the respective adapter (41);
- a pair of finger support units (43), wherein each finger support unit (43) is connected to the respective linear bearing (42) and respective adapter (41) so that linear movement of each adapter (41) is translated into a linear movement of respective finger support unit (43);
wherein each finger support unit (43) comprises cut-outs (44) and protrusions (45), wherein the protrusions (45) of one finger support unit (43) are positioned within the cut-outs (44) of second finger support unit (43) so that the linear movement of both finger support units (43) is limited to the movement of protrusions (45) of one finger support unit (43) within the cut-outs (44) of second finger support unit (43);
- transition brackets (46) connected to the finger support units (43) in the area of the protrusions (45) of the finger support units (43);
- gripper fingers (5), wherein each gripper finger (5) comprises a finger rod (51) and a finger end (52) connected to the one end of the finger rod (51), and the gripper finger (5) is connected to the transition bracket (46) through the finger rod (51), and wherein the finger end (52) comprises at least two gripping rollers (53) rotatably connected thereto,
wherein the gripper fingers (5) are arranged in pairs so that both gripper fingers (5) can grip a sample tube (10) to be handled, and wherein the pair of gripper finger (5) are arranged so that the gripping rollers (53) of one finger end (52) faces the gripping rollers (53) of the second finger end (52);
and wherein the finger rod (51) is made of elastic material so that the finger rod (51) flexes when the pair of gripper finger (5) is pushed onto the sample tube (10), and wherein the finger rod (51) is made more elastic than the finger end (52) allowing to grip various sizes of sample tubes (10) due to elasticity of the finger rod (51), but at the same time securely holding the sample tubes (10) by means of more rigid finger ends (52).

2. The laboratory tube handling system (1) according to claim 1, wherein one pair of the gripper fingers (5) are connected to two transition bracket (46) and arranged opposite side of the gripper (4) in relation to other pairs of the gripper fingers (5), in result of which the gripper fingers (5) are arranged on two opposite sides of the gripper (4).

3. A method for handling sample tubes (10) by means of the laboratory tube handling system (1) according to any of claims 1 to 3, wherein the method comprises the following steps:
- moving the gripper (4) by means of the robotic arm (3) so that the pairs of the gripper fingers (5) are positioned at the test tubes (10) to be handled, wherein the pairs of the gripper fingers (5) are closed;
- moving the gripper (4) by means of the robotic arm (3) so that each pair of the gripper fingers (5) is pushed onto the test tube (10) to be handled, in result of which the pair of the gripper fingers (5) grips the test tube (10);
- moving the gripper (4) by means of the robotic arm (3) so that the pairs of the gripper fingers (5) with griped test tubes (10) are positioned at a designated place where the gripped test tubes (10) should be released; and
- opening the pairs of the gripper fingers (5) releasing the tests tubes (10) in the designated place.
